# EUROPÄISCHE PATENTSCHRIFT

(11) **EP 1 741 904 B1**
(45) Veröffentlichungstag und Bekanntmachung des Hinweises auf die Patenterteilung: **13.08.2008**
(21) Anmeldenummer: 06121780.8
(22) Anmeldetag: 08.03.2002
(51) Int. Cl.: F02D 13/02

(54) **Verfahren zur Steuerung eines Viertakt-Ottomotors mit variabler Ventilsteuerung**
Method to operate a four-stroke spark ignition engine having variable valve control
Procédé de commande d'un moteur à quatre temps à allumage par étincelle comprenant une commande de soupape variable

(43) Veröffentlichungstag der Anmeldung: 10.01.2007
(62) Teilanmeldung aus: 02100230.8
(73) Patentinhaber: Ford Global Technologies, LLC, Dearborn, MI 48126 (US)
(72) Erfinder: Phlips, Patrick Joseph, 50858, Koeln (DE)
(74) Vertreter: Drömer, Hans-Carsten

(56) Entgegenhaltungen:
- EP-A- 1 128 029
- EP-A1- 1 338 777
- DE-A- 2 942 326
- DE-A- 3 436 629
- JP-A- 11 200 904
- US-A- 5 233 948
- US-A- 5 586 527
- US-A- 5 931 127
- US-A1- 2001 050 067
- STEIN R A ET AL: "Dual Equal VCT - A Variable Camshaft Timing Strategy for Improved Fuel Economy and Emissions" SAE TECHNICAL PAPER 950975, 1995, XP008006453
- BOGGS D L ET AL: "The Otto-Atkinson Cycle Engine - Fuel Economy and Emissions Results and Hardware Design" SAE TECHNICAL PAPER 950089, 1995, XP008006455
- BLAKEY S C ET AL: "A Design and Experimental Study of an Otto Atkinson Cycle Engine Using Late Intake Valve Closing" SAE TECHNICAL PAPER 910451, 1991, XP008006456
- LURIA D ET AL: "THE OTTO-ATKINSON ENGINE - A NEW CONCEPT IN AUTOMOTIVE ECONOMY" SAE TECHNICAL PAPER SERIES, SOCIETY OF AUTOMOTIVE ENGINEERS, WARRENDALE, PA, US, 1982, Seiten 1-7, XP008006454 ISSN: 0148-7191

## Beschreibung

Die Erfindung betrifft ein Verfahren zur Steuerung eines Viertakt-Ottomotor mit phasenverstellbaren Ventilstellgliedern zum Öffnen und Schließen der Einlaßventile und Auslaßventile.

In Automobilen verwendete Brennkraftmaschinen mit Fremdzündung ("Ottomotoren") werden hauptsächlich mit einer stöchiometrischen Luft-Kraftstoff-Mischung betrieben, welche eine sehr effiziente Nachbehandlung der Emissionen und eine Drosselung zur Lastregelung erlaubt. Als Kraftstoff wird dabei fast ausschließlich Benzin verwendet. Die bei diesen Motoren mit der Drosselung und dem stöchiometrischen Betrieb bei Teillast verbundenen Kraftstoffverluste können durch einen mageren Betrieb verringert werden. Dieser magere Betrieb kann entweder vom Typ homogen oder vom Typ geschichtet mit Direkteinspritzung sein. In beiden Fällen können die den Motor verlassenden NOx-Emissionen nicht durch einen herkömmlichen Dreiwegekatalysator behandelt werden. Aus diesem Grunde sind Magerbetrieb-NOx-Fallen (LNT) entwickelt worden, mittels derer magere Abgase behandelt werden können. Der Nachteil derartiger, auf Magerbetrieb-NOx-Fallen basierender Systeme besteht darin, daß diese sehr viel teurer als Systeme mit herkömmlichen Dreiwegekatalysatoren sind. Im Falle der geschichteten Direkteinspritzung sind ferner die Systeme für Luftzufuhr, Kraftstoffzufuhr, Abgasrückführung und Zündung insgesamt sehr viel komplexer und daher teurer als bei üblichen Motoren.

Ein alternativer "stöchiometrischer" Ansatz zur Verbesserung des Kraftstoffverbrauches besteht darin, kleinere Motoren mit einem Turbolader (booster) zu versehen. Jedoch sind auch hier die Zusatzkosten für den Turbolader, den Zwischenkühler und deren Einrichtung erheblich.

Für niedrigpreisige Motoren kommen daher die vorstehend genannten Technologien praktisch nicht in Frage. Für diese Motoren ist eine variable Nockenwellensteuerung sinnvoller. Die damit erzielbaren Verbesserungen in der Kraftstoffausnutzung konzentrieren sich jedoch auf den Bereich geringerer Lasten.

Bei der Nockenwellen-Verstellung handelt es sich um eine bekannte Technologie, die zunehmend bei der Produktion von Benzinmotoren mit doppelten oben liegenden Nockenwellen eingesetzt wird. Wenn mit einer Verstellung der Nockenwelle die Öffnungs- und Schließzeiten der angekoppelten Ventile gleichermaßen verschoben werden, spricht man von einer "dual gleichen" Verstellung (Dual Equal VCT). Bei Motoren mit einer einzigen Nockenwelle verbessert die dual gleiche variable Nockenwellensteuerung die Motoremissionen und den Kraftstoffverbrauch. Eine Strategie zur Phasensteuerung derartiger Nockenwellen wird bei Stein et al. (Dual Equal VCT - A Variable Camshaft Timing Strategy for Improved Fuel Economy and Emissions, SAE Technical Paper 950975) erläutert. Der Kraftstoffverbrauch bei Teillast wird durch Hinzufügung von verdünnendem Gas zur Mischung (spätes Schließen des Auslaßventils und Öffnen des Einlaßventils), durch Erhöhung des effektiven Expansionsverhältnisses (spätes Öffnen des Auslaßventils) sowie die Reduzierung der Pumpverluste durch Reduzierung des effektiven Hubraumes (spätes Schließen der Einlaßventile) verbessert. Dies alles wird erreicht durch eine Verzögerung des Öffnens sowohl der Auslaß- als auch der Einlaßventile bei Teillast. Die Einschränkungen dieses Verfahrens bestehen jedoch darin, daß die Verbesserung der Kraftstoffausnutzung auf die untere Hälfte des Lastbereiches konzentriert ist.

Darüber hinaus ist eine als "Atkinsonzyklus" bezeichnete Steuerungstechnik bekannt, durch welche die Motoreffizienz insbesondere bei höheren Lasten gesteigert wird. Eine Definition und Analyse eines Otto-Atkinsonzyklus, der ein variables Schließen der Einlaßventile und ein veränderliches Brennkammervolumen erfordert, findet sich bei Luria et al. (The Otto-Atkinson engine, a new concept in automotive economy, SAE Technical Paper 820352) und Boggs et al. (The Otto-Atkinson engine - Fuel Economy and Emission Results and Hardware Design, SAE Technical Paper 950089). In der einfachsten Form erfordert der Atkinsonzyklus nur ein erhöhtes Kompressionsverhältnis und ein spätes Schließen der Einlaßventile (vgl.

Blakey, S., et al., "A Design and Experimental Study of an Otto Atkinson Cycle Engine Using Late Intake Valve Closing", SAE Technical Paper 910451). In der Praxis werden dabei häufig zusätzliche Konstruktionsänderungen auf der Einlaßseite des Motors vorgenommen, um eine optimale Drehmomentkurve des Motors bei Volllast zu erhalten.

Weiterhin sind mechanische Ventilstellglieder mit einer hohen Flexibilität hinsichtlich der Öffnungs- und Schließzeitpunkte sowie des Ventilhubes bekannt, welche einen Betrieb eines Ottomotors ohne Drosselklappen ermöglichen sollen. Die Steuerung der Zylinderfüllung über den Ventilhub erfordert dabei jedoch eine große mechanische Präzision in der Ausführung, damit es bei kleinen Hüben nicht zu Ungleichheiten zwischen den verschiedenen Zylindern kommt. Diese Anforderungen verteuern die entsprechenden Systeme, verkomplizieren ihre Wartung und erhöhen die Störanfälligkeit. Weiterhin durchlaufen derartige Systeme beim Übergang von großen Ventilhüben mit herkömmlichen Öffnungszeiten bei Volllast zu kurzen Ventilhüben und Öffnungszeiten bei Teillast stets einen Zwischenbereich, welcher keine funktionellen Vorteile bietet. Da während des üblichen Fahrbetriebes eines Fahrzeuges zahlreiche Übergänge stattfinden, werden die genannten Zwischenbereiche häufig durchlaufen, was dem Fahrer den Eindruck einer verzögerten Systemantwort vermittelt.

Aus der EP 1 128 029 B1 ist eine variable Ventilsteuerung für Hubkolbenbrennkraftmaschinen bekannt. Bei der bekannten variablen Ventilsteuerung ist es vorgesehen, die Ventile mit Hilfe von Nockenwellen anzusteuern, wobei eine Bewegungsübertragung von der Kurbelwelle der Hubkolbenbrennkraftmaschine auf die Nockenwellen mit Hilfe von Antriebsmitteln vorgesehen ist, die als Steuerkette ausgeführt sind. Dabei wird eine Auslaßnockenwelle, die für das Öffnen und Schließen der Auslaßventile vorgesehen ist, stets synchron zur Kurbelwelle angetrieben. Eine Öffnungsnockenwelle für Einlaßventile wird ebenfalls synchron zur Kurbelwelle angetrieben. Eine über ein Verstellgetriebe mit der Öffnungsnockenwelle für die Einlaßventile gekoppelte Schließnockenwelle für die Einlaßventile kann hingegen in ihrer Drehlage gegenüber der Öffnungsnockenwelle und gegenüber der Kurbelwelle in Abhängigkeit von Motor- und/oder Fahrzeugparametern verstellt werden. Mit der bekannten variablen Ventilsteuerung kann eine Beeinflussung der Schließzeit der Einlaßventile vorgenommen werden.

Vor diesem Hintergrund bestand eine Aufgabe der vorliegenden Erfindung darin, ein robustes und kostengünstiges Verfahren zur variablen Steuerung der Einlaß- und Auslaßventile eines Ottomotors bereitzustellen.

Diese Aufgabe wird durch ein Verfahren mit den Merkmalen des Anspruchs 1 gelöst.

Vorteilhafte Ausgestaltungen sind in den Unteransprüchen enthalten.

Für die Durchführung das Verfahrens ist ein Viertakt-Ottomotor vorgesehen der ein erstes Ventilstellglied zum Öffnen und Schließen der Auslaßventile und gegebenenfalls zum Öffnen der Einlaßventile aufweist, wobei das erste Ventilstellglied eine erste Verstelleinrichtung aufweist, über welche seine Phase verstellt und damit das Öffnen und Schließen der Auslaßventile verzögert beziehungsweise vorgezogen werden kann. Weiterhin enthält der Ottomotor ein zweites Ventilstellglied, das ausschließlich zum Schließen der Einlaßventile dient, vorzugsweise aller Einlaßventile einer Zylinderreihe, und das eine zweite Verstelleinrichtung zur Veränderung der Phasenlage des Schließzeitpunktes aufweist. Ein Antrieb der Ventilstellglieder ist mit Ventilantriebsmitteln vorgesehen.

Ein derartiger Viertakt-Ottomotor hat den Vorteil, daß dieser mit nur zwei Ventilstellgliedern und nur zwei zugehörigen Verstelleinrichtungen eine sehr flexible Ansteuerung des Motors erlaubt, welche sowohl bei Teillast als auch bei Volllast einen optimalen Betrieb ermöglicht. Erfindungsgemäß kann der Viertakt-Ottomotor so betrieben werden, daß bei festem Öffnen der Einlassventile das Schließen der Einlaßventile entsprechend der geforderten Motorkistung nach Früch oder spät vorstellt wird.

Insbesondere kann mit dem Ottomotor eine dual gleiche Ventilsteuerung vorgenommen werden, bei welcher Einlaßventile und Auslaßventile parallel verstellt werden, und es kann der Betrieb in einem Atkinsonzyklus mit einem verzögerten Schließen des Einlaßventils erfolgen. Die separate Einstellmöglichkeit der Phase des Schließens des Einlaßventils kann dabei funktionell auch als ein gegenüber dem Standardprogramm frühes Schließen des Einlaßventils eingesetzt werden, wodurch sich die in den Zylinder bei Volllast eintretende Gemischmenge steuern läßt. Der Bereich der Phasenvariation für das Schließen des Einlaßventils muß dabei nicht besonders groß sein, so daß sich die Phasenverstellung insbesondere mit herkömmlichen, kostengünstigen Nockenwellen erzielen läßt. Dabei werden kleine Ventilhübe vermieden, so daß geringere Anforderungen an die Präzision bestehen, was sich wiederum positiv auf die Herstellungskosten, den Wartungsaufwand und die Robustheit auswirkt. Weiterhin werden Zwischenbereiche der Einstellung weitgehend vermieden, wodurch sich die Fahreigenschaften verbessern.

Das erste Ventilstellglied kann vorteilhaft durch eine erste Nockenwelle und das zweite Ventilstellglied durch eine zweite Nockenwelle gebildet werden. Nockenwellen haben den Vorteil, bekannte, weit verbreitete, bewährte und und kostengünstige Mittel zur variablen Ventilsteuerung zu sein. Die Ventilantriebsmittel sind als Nockenwellenantrieb ausgeführt.

Vorteilhaft ist eine der genannten Nockenwellen über ihre zugehörige Verstelleinrichtung mit einem Nockenwellen-Antrieb gekoppelt und über die andere Verstelleinrichtung der anderen Nockenwelle mit dieser anderen Nockenwelle gekoppelt. Bei dieser Konfiguration wird somit die erste (alternativ: zweite) Nockenwelle von dem Antrieb angetrieben, wobei die zwischengeschaltete erste (zweite) Verstelleinrichtung eine Phasenverschiebung der ersten (zweiten) Nockenwelle relativ zum Antrieb erlaubt. Die erste (zweite) Nockenwelle überträgt dann ihre Drehung auf das zweite (erste) Verstellglied, welches mit der dort eingestellten Phasenverschiebung die zweite (erste) Nockenwelle antreibt. Ein derartiger Aufbau läßt sich sehr kompakt realisieren, da der Antrieb die Nokkenwellen quasi kaskadenförmig mit den zwischengeschalteten Verstellgliedern betreibt.

Bevorzugt ist das erste Ventilstellglied auch mit den Einlaßventilen gekoppelt, um diese öffnen zu können. Das heißt, daß das erste Ventilstellglied drei Funktionen übernimmt, nämlich das Öffnen und Schließen der Auslaßventile sowie das Öffnen der Einlaßventile. Der entsprechende Ottomotor kommt daher mit nur zwei Verstellgliedern - wie zum Beispiel zwei Nockenwellen - für die gesamte Steuerung der Ventile aus.

Bei einer alternativen erfindungsgemäßen Ausgestaltung des Viertakt-Ottomotors enthält dieser ein drittes Ventilstellglied zum (ausschließlichen) Öffnen der Einlaßventile. Vorteilhaft hieran ist, daß die Auslaßventile unabhängig von den Einlaßventilen betätigt werden können, wobei bei den Einlaßventilen zusätzlich das Öffnen und Schließen über separate Ventilstellglieder erfolgt und daher unabhängig einstellbar ist.

Das vorstehend genannte dritte Ventilstellglied wird von einer dritten Nockenwelle gebildet. Dabei ist die dritte Nockenwelle mit einem Antrieb wirksam gekoppelt und weiterhin über die erste Verstelleinrichtung mit der ersten Nockenwelle zur Betätigung der Auslaßventile und über die zweite Verstelleinrichtung mit der zweiten Nockenwelle gekoppelt, welche das Einlaßventil schließt. Diese Konfiguration läßt sich sehr kompakt realisieren, da der Drehantrieb in günstiger Weise von einer Nockenwelle auf die anderen weitergeleitet wird.

Somit kann das Verfahren zur Steuerung eines Viertakt-Ottomotors der vorstehend erläuterten Art vorteilhaft durchgeführt werden. Bei Durchführung des Verfahrens wird das Schließen der Einlaßventile entsprechend der vom Motor geforderten Leistung verzögert oder vorgezogen. Eine derartige separate Verzögerung oder Frühverstellung des Schließens der Einlaßventile ist möglich, da diese mit einem eigenen Ventilstellglied betrieben werden. Ferner wird bei Volllast die Lage des Öffnens und Schließens der Auslaßventile der Drehzahl angepaßt, sofern sich die Auslaßventile separat vom Öffnen des Einlaßventils verstellen lassen.

Vorzugsweise wird bei Teillast des Motors das Öffnen und Schließen der Auslaßventile und das Öffnen der Einlaßventile verzögert bzw. nach Spät verstellt. Das Schließen der Einlaßventile wird dagegen um etwa den doppelten Betrag der vorher genannten Verstellung nach Spät verstellt. Hierdurch läßt sich der Kraftstoffverbrauch verbessern, da Verdünnungsgas zum Gemisch hinzugefügt wird, das effektive Expansionsverhältnis erhöht wird und die Pumpverluste verringert werden.

Vorteilhaft kann im Leerlauf des Motors das Schließen der Einlaßventile verzögert werden. Dies ist unabhängig von der Verstellung der übrigen Ventilzeiten möglich, da für das Schließen der Einlaßventile ein eigenes Ventilstellglied vorgesehen ist. Sofern sich die Auslaßventile unabhängig vom Öffnen des Einlaßventils verstellen lassen, wird im Leerlauf vorzugsweise das Öffnen und Schließen der Auslaßventile vorgezogen.

Ein ähnliches Verfahren kann für einen Viertakt-Ottomotor angewendet werden, der ein drittes Verstellglied aufweist, welches zum Öffnen der Einlaßventile vorgesehen ist. Bei Volllast des Motors wird nun das Öffnen und Schließen der Einlaßventile entsprechend der geforderten Motorleistung nach Früh oder auch Spät verstellt, während das Öffnen und Schließen der Auslaßventile gleichzeitig drehzahlabhängig nach Spät verstellt wird.

Vorzugsweise wird bei diesem Verfahren bei Teillast des Motors und festem, nicht verstellten Öffnen der Einlaßventile sowohl das Öffnen und Schließen der Auslaßventile als auch das Schließen der Einlaßventile nach Spät verstellt.

Vorteilhaft wird bei diesem Verfahren im Leerlauf des Motors das Schließen des Einlaßventile nach Spät verstellt, während das Öffnen und Schließen der Auslaßventile nach Früh verschoben wird.

Im Folgenden wird die Erfindung mit Hilfe der Figuren beispielhaft näher erläutert.
Es zeigen:
- Fig. 1: schematisch eine erste Ausgestaltung einer Ventilsteuerung mit zwei Nokkenwellen;
- Fig. 2: den Ventilhub eines Auslaßventils und eines Einlaßventils in Abhängigkeit von dem Kurbelwellenwinkel bei der erfindungsgemäßen Ansteuerung einer Konfiguration gemäß Figur 1;
- Fig. 3: eine zweite Ausgestaltung einer erfindungsgemäßen Ventilsteuerung mit drei Nockenwellen; und
- Fig. 4: in einer Darstellung entsprechend Figur 2 den Ventilhub eines Auslaßventils und eines Einlaßventils in Abhängigkeit vom Kurbelwellenwinkel bei der erfindungsgemäßen Ansteuerung einer Konfiguration gemäß Figur 3.

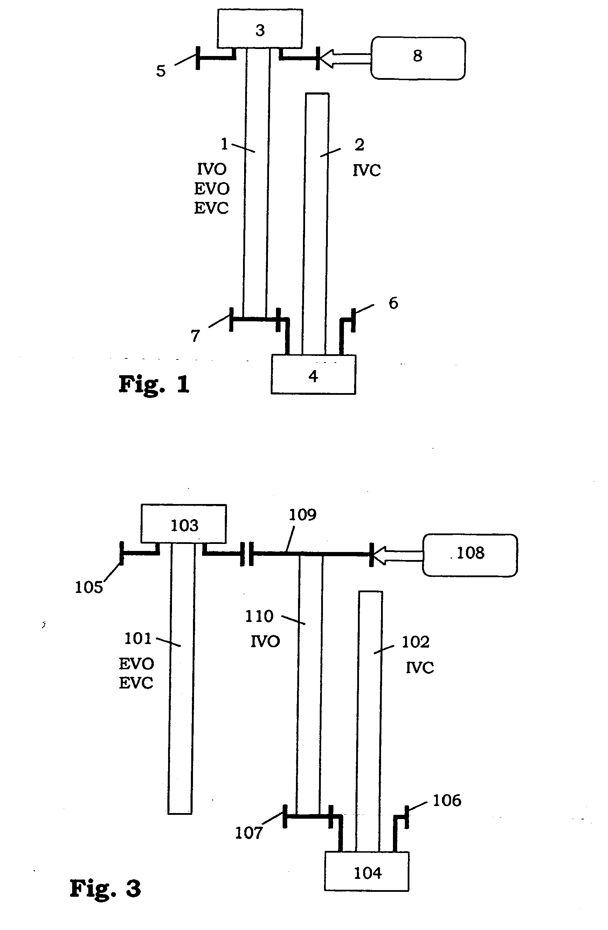

In Figur 1 ist schematisch eine erste Möglichkeit für eine erfindungsgemäße Ventilsteuerung an einem Viertakt-Ottomotor dargestellt, die die Durchführung des Verfahrens ermöglicht. Diese Ventilsteuerung enthält eine erste Nockenwelle 1, deren Nocken (nicht dargestellt) das Öffnen EVO und Schließen EVC der Auslaßventile einer Zylinderreihe (nicht dargestellt) sowie das Öffnen IVO der Einlaßventile (nicht dargestellt) der Zylinderreihe steuern. Der Antrieb der Nockenwelle 1 erfolgt in bekannter Weise durch einen Antrieb 8, welcher ein Rad 5 antreibt. Der Antrieb 8 kann zum Beispiel ein mit der Kurbelwelle des Ottomotors gekoppelter Zahnriemen sein. Das Rad 5 ist wiederum über eine Verstelleinrichtung 3 mit der Nockenwelle 1 gekoppelt, wobei die Verstelleinrichtung 3 in bekannter Weise ausgestaltet sein kann und eine Verstellung des Phasenwinkels zwischen dem Rad 5 und der Nockenwelle 1 erlaubt.

An dem Rad 5 und der ersten Verstelleinrichtung 3 gegenüberliegenden Ende der Nockenwelle 1 ist ein Zahnrad 7 angeordnet, welches ein weiteres Zahnrad 6 antreibt. Letzteres Zahnrad 6 ist über eine zweite Verstelleinrichtung 4 mit der zweiten Nockenwelle 2 gekoppelt, welche sich parallel und benachbart zur ersten Nokkenwelle 1 erstreckt. Die zweite Nockenwelle 2 steuert ausschließlich das Schließen IVC der Einlaßventile. Aufgrund der kaskadenförmigen Anordnung der Nokkenwellen 1, 2 wirkt sich eine Verstellung der Verstelleinrichtung 3 auf beide Nokkenwellen aus. Die Aufspaltung des Öffnens und Schließens von Ventilen auf zwei Nockenwellen ist zum Beispiel mit Ventilmechanismen möglich, wie sie in der US 5 178 105 oder der DE 43 22 480 offenbart sind.

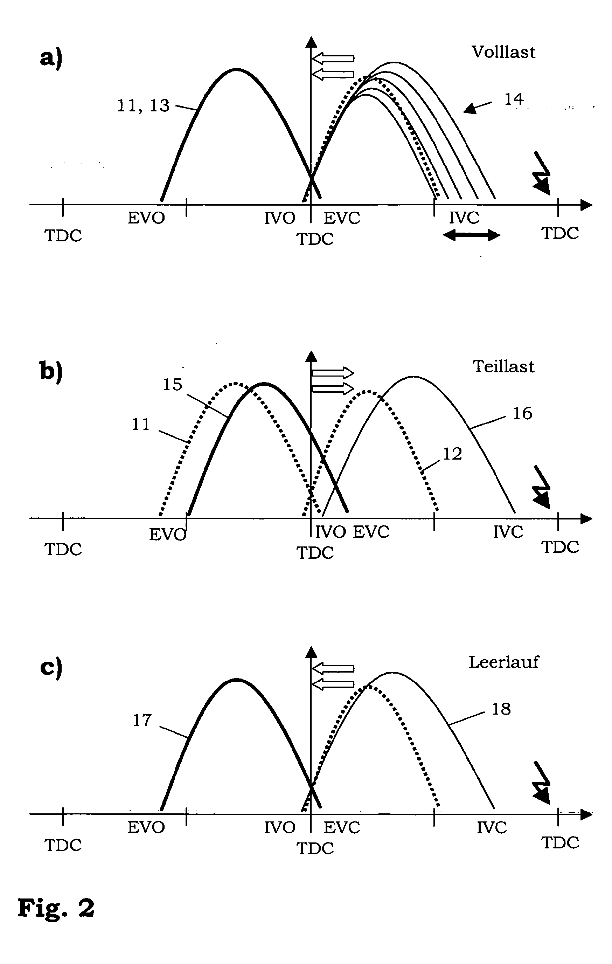

Figur 2 zeigt in drei Ventilhub-Diagrammen eine bevorzugte Art der Motorsteuerung, die mit dem in Figur 1 gezeigten System möglich ist. Das oberste Diagramm a) zeigt die Ansteuerung der Ventile bei Volllast. Das Öffnen und Schließen der Auslaßventile erfolgt in diesem Falle ohne Verstellung auf der Kurve 13, welche dem Normalbetrieb dieser Ventile (gestrichelte Kurve 11 in Figur 2b) bei einem herkömmlichen Ottomotor entspricht. Da das Öffnen der Einlaßventile von derselben Nockenwelle 1 wie die Auslaßventile gesteuert wird, ist auch dieses unverstellt und findet kurz vor dem oberen Totpunkt TDC des Kolbens zwischen dem Ausstoßtakt und dem Ansaugtakt statt. Durch eine separate Betätigung des zweiten Verstellgliedes 4 (Figur 1) kann der Schließzeitpunkt IVC des Einlaßventils entsprechend der Kurvenschar 14 variiert werden, so daß die sich im Zylinder befindliche Gemischmenge nach Bedarf eingestellt werden kann.

Figur 2b) zeigt die Ansteuerung bei Teillast des Motors. Durch eine Spätverstellung der ersten Nockenwelle 1 (Figur 1) wird das Öffnen und Schließen der Auslaßventile entsprechend Kurve 15 sowie das Öffnen des Einlaßventils IVO verzögert. Ferner wird das Schließen IVC des Einlaßventils über die zweite Nockenwelle 2 (Figur 1) maximal verzögert, so daß sich für die Einlaßventile insgesamt der Verlauf entlang der Kurve 16 ergibt. Die gestrichelte Kurve 12 zeigt den "normalen" Einlaßventilhub bei einem herkömmlichen Ottomotor.

Figur 2c) zeigt die Ansteuerung im Leerlauf des Motors. Die Nockenwelle 1 wird hierbei in Frühverstellung betrieben, so daß sich die Auslaßventile entsprechend der "normalen" Kurve 17 bewegen und das Öffnen des Einlaßventils IVO zum Standard-Zeitpunkt stattfindet. Dies minimiert den Restgasanteil und sorgt so für einen regelmäßigen Lauf des Motors. Die zweite Nockenwelle 2 wird in Spätverstellung für ein möglichst spätes Schließen IVC des Einlaßventils betrieben. Der Übergang vom Zustand nach Figur 2b) zu 2c) kann allein durch eine Betätigung der Verstelleinrichtung 3 (Figur 1) erfolgen, da die beiden Nockenwellen kaskadenförmig hieran hängen.

Figur 3 zeigt eine alternative Ausgestaltung einer Ventilsteuerung für einen Viertakt-Ottomotor, wobei drei Nockenwellen 101, 102 und 110 parallel zueinander und benachbart angeordnet sind.

Die erste Nockenwelle 101 ist in diesem Falle nur mit den Auslaßventilen gekoppelt, um deren Öffnen EVO und Schließen EVC zu steuern. Die zweite Nockenwelle 102 ist ähnlich wie bei Figur 1 nur mit den Einlaßventilen gekoppelt, um deren Schließen IVC zu steuern. Die dritte Nockenwelle 110 ist ebenfalls nur mit den Einlaßventilen gekoppelt, um deren Öffnen IVO zu steuern.

Die Drehung der Nockenwellen erfolgt ausgehend von einem Antrieb 108, welcher auf ein Zahnrad 109 am Ende der dritten Nockenwelle 110 und auf ein Zahnrad 105 an der ersten Nockenwelle 110 wirkt. Das Zahnrad 105 treibt über eine erste Verstelleinrichtung 103 die erste Nockenwelle 101 an.

An dem genannten Rad 109 gegenüberliegenden Ende der dritten Nockenwelle 110 weist diese ein weiteres Zahnrad 107 auf, welches mit einem Zahnrad 106 der zweiten Nockenwelle 102 zusammenwirkt. Das letztgenannte Zahnrad 106 bewirkt über die zweite Verstelleinrichtung 104 die Drehung der zweiten Nockenwelle 102.

Durch den geschilderten Aufbau wird ein sehr kompakter, gekoppelter Antrieb der drei Nockenwellen möglich, wobei die dritte Nockenwelle 110 direkt und ohne Verstellmöglichkeit mit dem Antrieb 108 gekoppelt ist, während die erste Nockenwelle 101 und die zweite Nockenwelle 102 jeweils über eigene Verstellglieder 103 beziehungsweise 104 mit der dritten Nockenwelle winkelmässig gekoppelt sind.

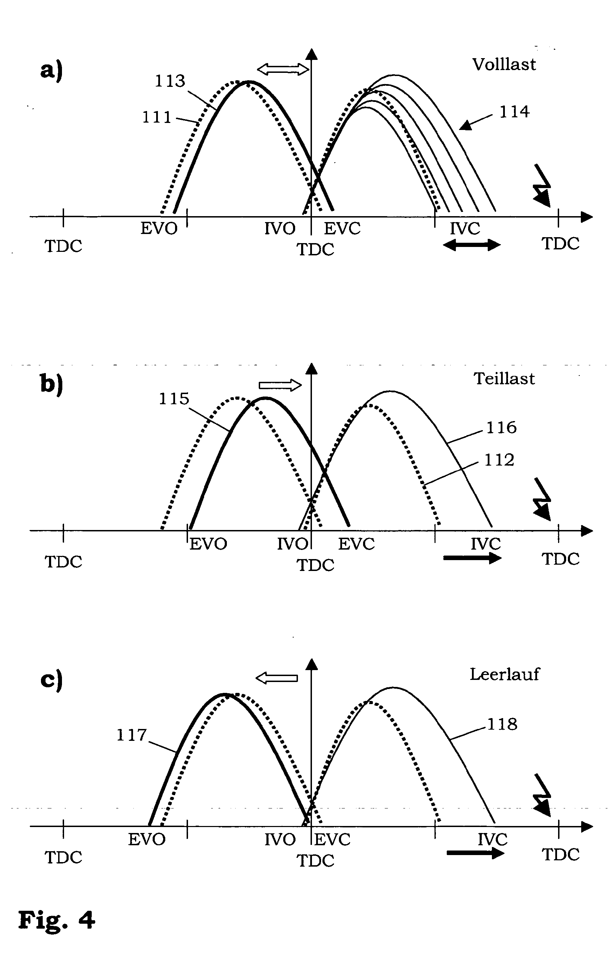

In Figur 4 sind in Ventilhub-Diagrammen die Steuerungsmöglichkeiten schematisch dargestellt, die sich mit einer Ventilsteuerung entsprechend Figur 3 verwirklichen lassen.

Der Betrieb bei Volllast des Motors erfolgt gemäß Figur 4a), wobei die Steuerung der Auslaßventile entsprechend der Kurve 113 stattfindet, die gegenüber der Standardkurve 111 (herkömmlicher Ottomotor) drehzahlabhängig nach spät verstellt ist. Das Schließen IVC des Einlaßventils wird durch das Verstellglied 104 (Figur 3) entsprechend den Bedürfnissen der Motorleistung variiert, so daß sich die entsprechende Kurvenschar 114 ergibt. Da das Öffnen IVO der Einlaßventile von der dritten Nockenwelle 110 (Figur 3) ohne eine Verstellmöglichkeit gesteuert wird, ist es in allen drei Diagrammen gegenüber der Standardkurve 112 (herkömmlicher Ottomotor) unverschoben.

Gemäß Figur 4b) wird bei Teillast das Öffnen und Schließen der Auslaßventile entsprechend der Kurve 115 stärker nach spät verstellt als bei Volllast. Das Schließen IVC des Einlaßventils erfolgt entsprechend der Kurve 116 ebenfalls verzögert.

Im Leerlauf (Figur 4c) wird das Öffnen und Schließen der Auslaßventile entsprechend der Kurve 117 frühverstellt, um den Restgasanteil zu minimierten, während das Schließen IVC des Einlaßventils gemäß der Kurve 118 wie bei Figur 4b) möglichst spät stattfindet.

## Patentansprüche

1. Verfahren zur Steuerung eines Viertakt-Ottomotors, der ein erstes Ventilstellglied (1) zum Öffnen (EVO) und Schließen (EVC) der Auslassventile aufweist, das eine erste Verstelleinrichtung (3) aufweist, über welche seine Phase verstellt und damit das Öffnen (EVO) und Schließen (EVC) der Auslassventile verzögert beziehungsweise vorgezogen werden kann, und mit einem zweiten Ventilstellglied (2), das ausschließlich zum Schließen der Einlassventile (IVC) dient und das eine zweite Verstelleinrichtung (4) zur Veränderung der Phasenlage des Schließzeitpunktes aufweist, wobei bei festem Öffnen der Einlassventile (IVO) die Phase des zweiten Ventilstellglieds (2) mittels der zweiten Verstelleinrichtung (4) verändert wird, um das Schließen (IVC) der Einlassventile entsprechend der geforderten Motorleistung nach spät oder früh zu verstellen,
**dadurch gekennzeichnet, dass**
eine von dem ersten Ventilstellglied (1) umfasste erste Nockenwelle (1) sowohl das Öffnen (EVO) und Schließen (EVC) der Auslassventile als auch das Öffnen (IVO) der Einlassventile steuert.

2. Verfahren nach Anspruch 1,
**dadurch gekennzeichnet, dass**
bei Teillast des Motors das Öffnen (EVO) und Schließen (EVC) der Auslassventile sowie das Öffnen (IVO) der Einlassventile nach spät verstellt werden, während das Schließen der Einlassventile (IVC) um etwa den doppelten Betrag nach spät verstellt wird.

3. Verfahren nach Anspruch 1,
**dadurch gekennzeichnet, dass**
im Leerlauf des Motors das Schließen (IVC) der Einlassventile nach spät verstellt wird, während das Öffnen (EVO) und Schließen (EVC) der Auslassventile im herkömmlichen Bereich stattfindet.

4. Verfahren zur Steuerung eines Viertakt-Ottomotors, der ein erstes Ventilstellglied (101) zum Öffnen (EVO) und Schließen (EVC) der Auslassventile aufweist, das eine erste Verstelleinrichtung (103) aufweist, über welche seine Phase verstellt und damit das Öffnen (EVO) und Schließen (EVC) der Auslassventile verzögert beziehungsweise vorgezogen werden kann, und mit einem zweiten Ventilstellglied (102), das ausschließlich zum Schließen der Einlassventile (IVC) dient und das eine zweite Verstelleinrichtung (104) zur Veränderung der Phasenlage des Schließzeitpunktes aufweist, wobei bei festem Öffnen der Einlassventile (IVO) die Phase des zweiten Ventilstellglieds (102) mittels der zweiten Verstelleinrichtung (104) verändert wird, um das Schließen (IVC) der Einlassventile entsprechend der geforderten Motorleistung nach spät oder früh zu verstellen, wobei ein drittes Ventilstellglied (110) zum Öffnen (IVO) der Einlassventile vorgesehen ist,
**dadurch gekennzeichnet, dass**
bei festem Öffnen der Einlassventile (IVO) das Schließen (IVC) der Einlassventile entsprechend der geforderten Motorleistung nach Spät oder Früh verstellt wird und dabei das Öffnen (EVO) und Schließen (EVC) der Auslassventile drehzahlabhängig nach Spät verstellt wird, dass ein Antrieb (108) ein Zahnrad (109) des als Nockenwelle (110) ausgebildeten dritten Ventilstellglieds antreibt und dass das Zahnrad (109) die erste Verstelleinrichtung (103) zur Phasenverschiebung des als Nockenwelle (101) ausgebildeten ersten Verstellglieds antreibt.

5. Verfahren nach Anspruch 4,
**dadurch gekennzeichnet, dass**
bei Teillast des Motors und festem Öffnen der Einlassventile (IVO) sowohl das Öffnen (EVO) und Schließen (EVC) der Auslassventile als auch das Schließen (IVC) der Einlassventile nach Spät verstellt wird.

6. Verfahren nach Anspruch 4,
**dadurch gekennzeichnet, dass**
im Leerlauf des Motors das Schließen (IVC) der Einlassventile nach Spät verstellt ist, und das Öffnen (EVO) und Schließen (EVC) der Auslassventile nach Früh verschoben wird.

## Claims

1. Method for controlling a four-stroke spark ignition engine which has a first valve actuator element (1) for opening (EVO) and closing (EVC) the outlet valves, which has a first adjustment device (3) by means of which its phase can be adjusted and therefore the opening (EVO) and closing (EVC) of the outlet valves can be delayed or brought forward, and having a second valve actuator element (2) which serves exclusively for closing the inlet valves (IVC) and which has a second adjustment device (4) for changing the phase angle of the closing time, wherein in the case of fixed opening of the inlet valves (IVO) the phase of the second valve actuator element (2) is changed by means of the second adjustment device (4) in order to adjust the closing (IVC) of the inlet valves in the retarded or early direction in accordance with the required engine power, **characterized in that** a first camshaft (1) which is included in the first valve actuator element (1) controls both the opening (EVO) and closing (EVC) of the outlet valves and the opening (IVO) of the inlet valves.

2. Method according to Claim 1, **characterized in that** in the case of a partial load of the engine the opening (EVO) and closing (EVC) of the outlet valves and the opening (IVO) of the inlet valves are adjusted in the retarded direction, while the closing of the inlet valves (IVC) is adjusted in the retarded direction by approximately twice the absolute value.

3. Method according to Claim 1, **characterized in that** during idling of the engine the closing (IVC) of the inlet valves is adjusted in the retarded direction, while the opening (EVO) and closing (EVC) of the outlet valves take place in the conventional range.

4. Method for controlling a four-stroke spark ignition engine which has a first valve actuator element (101) for opening (EVO) and closing (EVC) the outlet valves, which has a first adjustment device (103) by means of which its phase can be adjusted and therefore the opening (EVO) and closing (EVC) of the outlet valves can be delayed or brought forward, and having a second valve actuator element (102) which serves exclusively for closing the inlet valves (IVC), and which has a second adjustment device (104) for changing the phase angle of the closing time, wherein in the case of fixed opening of the inlet valves (IVO) the phase of the second valve actuator element (102) is changed by means of the second adjustment device (104) in order to adjust the closing (IVC) of the inlet valves in the retarded or early direction in accordance with the required engine power, wherein a third valve actuator element (110) is provided for opening (IVO) the inlet valves, **characterized in that** in the case of fixed opening of the inlet valves (IVO) the closing (IVC) of the inlet valves is adjusted in the retarded or early direction in accordance with the required engine power, and in this context the opening (EVO) and closing (EVC) of the outlet valves is adjusted in the retarded direction as a function of the rotational speed, **in that** a drive (108) drives a gear wheel (109) of the third valve actuator element which is embodied as a camshaft (110), and **in that** the gear wheel (109) drives the first adjustment device (103) in order to shift the phase of the first adjustment element which is embodied as a camshaft (101).

5. Method according to Claim 4, **characterized in that** in the case of partial load of the engine and a fixed opening of the inlet valves (IVO) both the opening (EVO) and closing (EVC) of the outlet valves and the closing (IVC) of the inlet valves are adjusted in the retarded direction.

6. Method according to Claim 4, **characterized in that** during idling of the engine the closing (IVC) of the inlet valves is adjusted in the retarded direction, and the opening (EVO) and closing (EVC) of the outlet valves is shifted in the early direction.

## Revendications

1. Procédé de commande d'un moteur à quatre temps à allumage par étincelle qui présente un premier organe de réglage de soupape (1) pour ouvrir (EVO) et fermer (EVC) les soupapes d'échappement, qui présente un premier dispositif de réglage (3) par le biais duquel sa phase peut être réglée et donc l'ouverture (EVO) et la fermeture (EVC) des soupapes d'échappement peuvent être retardées ou avancées, et comprenant un deuxième organe de réglage de soupape (2) qui sert exclusivement à fermer les soupapes d'admission (IVC) et qui présente un deuxième dispositif de réglage (4) pour faire varier la position de phase de l'instant de fermeture, la phase du deuxième organe de réglage de soupape (2) étant modifiée lors de l'ouverture fixe des soupapes d'admission (IVO), au moyen du deuxième dispositif de réglage (4), afin de régler dans le sens de l'avance ou du retard la fermeture (IVC) des soupapes d'admission en fonction de la puissance du moteur demandée,
**caractérisé en ce**
**qu'**un premier arbre à cames (1) inclus par le premier organe de réglage de soupape (1) commande à la fois l'ouverture (EVO) et la fermeture (EVC) des soupapes d'échappement ainsi que l'ouverture (IVO) des soupapes d'admission.

2. Procédé selon la revendication 1,
**caractérisé en ce que**
pour une charge partielle du moteur, l'ouverture (EVO) et la fermeture (EVC) des soupapes d'échappement ainsi que l'ouverture (IVO) des soupapes d'admission (IVC) sont réglées dans le sens d'un retard, tandis que la fermeture des soupapes d'admission (ivc) est réglée dans le sens d'un retard d'une valeur approximativement double.

3. Procédé selon la revendication 1,
**caractérisé en ce que**
pendant la marche à vide du moteur, la fermeture (IVC) des soupapes d'admission est réglée dans le sens d'un retard, tandis que l'ouverture (EVO) et la fermeture (EVC) des soupapes d'échappement ont lieu dans la plage usuelle.

4. Procédé de commande d'un moteur à quatre temps à allumage par étincelle qui présente un premier organe de réglage de soupape (101) pour ouvrir (EVO) et fermer (EVC) les soupapes d'échappement, qui présente un premier dispositif de réglage (103) par le biais duquel sa phase peut être réglée et donc l'ouverture (EVO) et la fermeture (EVC) des soupapes d'échappement peuvent être retardées ou avancées, et comprenant un deuxième organe de réglage de soupape (102) qui sert exclusivement à fermer les soupapes d'admission (IVC) et qui présente un deuxième dispositif de réglage (104) pour faire varier la position de phase de l'instant de fermeture, la phase du deuxième organe de réglage de soupape (102) étant modifiée lors de l'ouverture fixe des soupapes d'admission (IVO), au moyen du deuxième dispositif de réglage (104), afin de régler dans le sens de l'avance ou du retard la fermeture (IVC) des soupapes d'admission en fonction de la puissance du moteur demandée, un troisième organe de réglage de soupape (110) étant prévu pour ouvrir (IVO) les soupapes d'admission,
**caractérisé en ce que**
lors de l'ouverture fixe des soupapes d'admission (IVO), la fermeture (IVC) des soupapes d'admission est réglée dans le sens du retard ou de l'avance en fonction de la puissance du moteur demandée, et en l'occurrence l'ouverture (EVO) et la fermeture (EVC) des soupapes d'échappement sont réglées en fonction du régime dans le sens du retard, **en ce qu'**un entraînement (108) entraîne une roue dentée (109) du troisième organe de réglage de soupape réalisé sous forme d'arbre à cames (110) et **en ce que** la roue dentée (109) entraîne le premier dispositif de réglage (103) pour le décalage de phase du premier organe de réglage réalisé sous forme d'arbre à cames (101).

5. Procédé selon la revendication 4,
**caractérisé en ce que**
pour une charge partielle du moteur et une ouverture fixe des soupapes d'admission (IVO), l'ouverture (EVO) et la fermeture (EVC) des soupapes d'échappement ainsi que la fermeture (IVC) des soupapes d'admission sont réglées dans le sens d'un retard.

6. Procédé selon la revendication 4,
**caractérisé en ce que**
pendant la marche à vide du moteur, la fermeture (IVC) des soupapes d'admission est réglée dans le sens d'un retard, et l'ouverture (EVO) et la fermeture (EVC) des soupapes d'échappement sont décalées dans le sens d'une avance.
